Europäisches Patentamt

European Patent Office

Office européen des brevets

(19)

(11) EP 0 731 310 B1

(12) EUROPÄISCHE PATENTSCHRIFT

(45) Veröffentlichungstag und Bekanntmachung des Hinweises auf die Patenterteilung:
11.08.1999 Patentblatt 1999/32

(51) Int Cl.⁶: **F16L 58/04**, F16L 58/10

(21) Anmeldenummer: 96103098.8

(22) Anmeldetag: 01.03.1996

(54) **Korrosionsbeständiges Rohr und Verfahren zu dessen Herstellung**

Corrosion resistant tube and method of manufacture

Tube résistant à la corrosion et procédé de fabrication

(84) Benannte Vertragsstaaten:
**BE DE DK ES FR GB IT NL SE**

(30) Priorität: 08.03.1995 DE 19508164

(43) Veröffentlichungstag der Anmeldung:
**11.09.1996 Patentblatt 1996/37**

(73) Patentinhaber: **WIELAND-WERKE AG**
**89079 Ulm (DE)**

(72) Erfinder:
• **Müller, Gert, Dipl.-Ing. Dr.rer.nat.**
**89233 Neu-Ulm (DE)**
• **Koch, Roland, Dipl.-Ing. (FH)**
**89165 Dietenheim (DE)**
• **Breu, Monika, Dipl-Ing. Dr.rer.nat.**
**89073 Ulm (DE)**
• **Siegele, Harald, Dipl.-Chem.**
**89269 Vöhringen (DE)**

(56) Entgegenhaltungen:
DE-A- 4 321 244          FR-A- 2 149 294
GB-A- 2 041 483

**Beschreibung**

Die Erfindung betrifft ein korrosionsbeständiges Rohr aus Kupfer oder einer Kupfer-Legierung nach dem Oberbegriff des Anspruchs 1.

Treten Kupfer oder Kupfer-Legierungen in Kontakt mit Wasser, so geht eine gewisse Kupfer-Menge in Lösung. Hierbei handelt es sich im Prinzip um Korrosion. Allerdings geht diese Kupfer-Abgabe in der Regel nicht so weit, daß tatsächlich ein Korrosionsschadensfall hieraus entsteht. Das Inlösunggehen von Kupfer, insbesondere in Trinkwasserinstallationen, wird aber in letzter Zeit mit Hinblick auf ein gesteigertes Umweltbewußtsein und gesundheitliche Aspekte zunehmend diskutiert. Eine Absenkung des derzeit noch gültigen Richtwertes von 3 mg Cu/l nach 12 h Stagnation in der deutschen Trinkwasserverordnung bzw. die Festsetzung eines europaweiten niedrigeren Grenzwertes ist in absehbarer Zeit wahrscheinlich. Im allgemeinen wird der oben angegebene Richtwert nicht erreicht oder überschritten. Ausnahmen ergeben sich unter Umständen bei Neuinstallationen oder ungünstigen Wasserqualitäten.

Es sind mehrere Veröffentlichungen bekannt, in denen von Korrosionsschutzschichten auf Rohrinnenflächen berichtet wird. Hierbei handelt es sich um vergleichsweise dicke Schichten von ca 1 bis 200 μm, die aus Kunststoff/Harz oder aus Metall bestehen können. Kunststoff-/Harz-Beschichtungen werden z.B. aufgesprüht (DE-OS 3.038.084), durch nicht näher definierte Beschichtungseinrichtungen aufgetragen (EPS 0.299.408) oder die entsprechenden Substanzen werden während der Kaltumformung eingesetzt und dabei bzw. anschließend in die gewünschte Beschichtung umgewandelt (DE-PS 4.110.584). Metallische Beschichtungen bestehen vorwiegend aus Zinn, das durch chemische Abscheidung aufgebracht wird (EP-OS 0.503.389, JP-OS 4-45.282) oder durch ein spezielles Aufheiz-/Abkühlverfahren in einem Hochfrequenzofen (DE-OS 3.823.309). Alle diese Verfahren sind aufwendig und meist mit zusätzlichen Arbeitsschritten verbunden, die in den normalen Fertigungsprozeß integriert werden müssen und daher kostenintensiv sind. Kunststoff-/Harzbeschichtungen sind außerdem in der Regel nicht genügend wärmebeständig, anfällig für Quellung und Unterwanderung und infolgedessen kann die Haftfestigkeit problematisch sein. An kleinen Fehlstellen kann es zu Unterwanderungen und lokalen Korrosionsangriffen kommen.

Der Erfindung liegt daher die Aufgabe zugrunde, ein Rohr aus Kupfer oder einer Kupfer-Legierung zur Verfügung zu stellen, dessen Cu-Lässigkeit durch eine geeignete Schutzschicht reduziert wird.

Die Aufgabe wird erfindungsgemäß dadurch gelöst, daß durch den gezielten Einbau der Elemente Chlor, Phosphor, Silizium und Schwefel einzeln oder in Kombination eine einige Monolagen dicke, modifizierte Oberflächenschicht gebildet ist, in der diese Elemente an der Werkstoffoberfläche chemisch gebunden oder adsorbiert sind, wobei die Gesamtkonzentration der genannten Elemente in dieser Schicht von der Oberfläche in Richtung Grundwerkstoff zunächst, beginnend bei einem Anteil 0,1 bis 4 At.-% (Rest Sauerstoff, Kohlenstoff und Legierungsbestandteile), ansteigt,

im oberflächennahen Bereich innerhalb einer Ausdehnung von etwa 10 nm ein Maximum von 5 bis 50 At.-% durchschreitet und zum Grundwerkstoff hin auf Gehalte unvermeidlicher Verunreinigungen abfällt und sich der Konzentrationsverlauf $c_i$ der Einzelelemente innerhalb der Schicht durch folgende Gleichung beschreiben läßt:

$$c_i(x) = c_{io}\, e^{-a_i x} + \frac{a_i\, c_{io}}{1 - a_i\, x_{ic_{max}}} \cdot x \cdot e^{-a_i x},$$

wobei

| | |
|---|---|
| $c_i$: | Konzentration des Elementes i, |
| $c_{io}$: | Konzentration des Elementes i an der Oberfläche der Schicht, |
| $c_{i\,max}$: | Konzentrationsmaximum in der Tiefe $x_{ic_{max}}$, |
| x: | Eindringtiefe, |
| $x_{ic_{max}}$: | Ort maximaler Konzentration des Elementes i, |
| $a_i$: | Additiv- und Elementabhängige Konstante. |

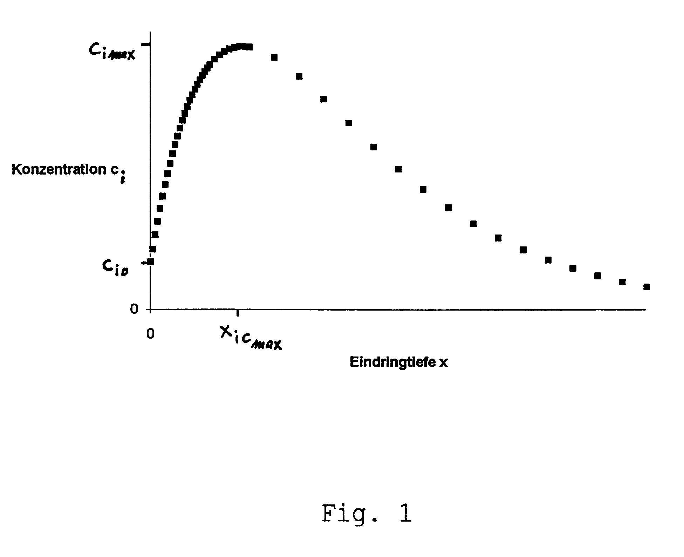

(Die Gesamtkonzentration ergibt sich durch Überlagerung der Einzelkonzentrationen / At.-% = Atomgewicht-%). Der Kurvenverlauf für $c_i(x)$ ist in Fig.1 dargestellt.

Korrosionsinhibitoren auf organischer Basis für den Einsatz im Wärmeaustauscherbereich und in Kühlkreisläufen, die oftmals S-, aber auch P-, Cl- oder Si-Atome oder -Verbindungen enthalten, werden in der Literatur beschrieben. Durch die einfache Zudosierung dieser Inhibitoren in die zu schützenden Kreisläufe entsteht allenfalls eine reversible Schichtbildung an der Grenzfläche Werkstoff/Medium, die den Gesetzen der Temperatur- und Druckabhängigkeit bei Adsorptionsvorgängen folgt. Die zugegebenen Inhibitormoleküle werden nicht gezielt durch unterstützende Maßnahmen wie Druck, Reibung, Temperatur usw. zur Reaktion mit der Werkstoffoberfläche gebracht. Diese Inhibitoren sind daher nur in geschlossenen Anlagen wirksam, da sie nicht fest genug mit dem zu schützenden Werkstoff verbunden sind und somit in offenen Systemen im Laufe der Zeit wieder ausgetragen werden. Außerdem sind sie nicht für den Einsatz im Lebensmittelbereich geeignet.

Die erfindungsgemäß modifizierte Oberflächenschicht enthält vorzugsweise Chlorid-, Phosphat-, Silikat-, Siloxan-, Sulfid- und/oder Sulfatanteile, wobei insbes. das Sulfid/Sulfat-Verhältnis 2:1 bis 4:1 beträgt.

Es kommen nur Substanzen zum Tragen, die ohnehin in ionischer Form im Wasser vorliegen, in den sich natürlich bildenden Deckschichten enthalten sind oder in der Trinkwasseraufbereitung/Lebensmittelbereich zulässig sind, so daß keine zusätzliche chemische Wasserbelastung erfolgt.

Mittels XPS (X-Ray Photoelectron Spectroscopy) wurden Tiefenprofile nach unterschiedlichen Sputterabträgen angefertigt, um Aussagen über die modifizierte Oberflächenschicht und den Konzentrationsverlauf innerhalb dieser Schicht zu erhalten. Die Dicke D der Schicht beträgt nur wenige Monolagen. Die Schichtdicke bewegt sich vorzugsweise zwischen D = 15 bis 100 nm, wobei die Elemente Chlor, Phosphor, Silizium und/oder Schwefel in einem oberflächenseitigen Schichtbereich, Ausdehnung etwa 10 nm, angereichert sind. Die maximale Konzentration liegt je nach Element vorzugsweise in einer Tiefe von 1 bis 5 nm. Zum Grundwerkstoff hin fällt die Element-Konzentration allmählich auf Null ab, entsprechend nehmen Cu bzw. weitere Legierungsbestandteile in ihrer Konzentration innerhalb der Schicht zu, bis schließlich das Grundmaterial erreicht ist.

Das Verfahren zur Herstellung des erfindungsgemäßen, korrosionsbeständigen Rohres ist dadurch gekennzeichnet, daß dem beim Umform(Zieh-)prozeß für das Rohr verwendeten Schmiermittel (Ziehöl/-fett/-seife) Chlor, Phosphor, Silizium und/ oder Schwefel über Additive bzw. Schwefel elementar (als Schwefelblüte) zugegeben werden und daß die Additive durch tribochemische Reaktion beim Umformprozeß unter der hierbei erzeugten Wärme oder in Kombination mit einer thermischen Nachbehandlung umgesetzt werden. Entsprechend der eingesetzten Additive, der Art der Bindung bzw. Bindungsenergie erfolgt die Aktivierung bei verschiedenen Temperaturen und Zeiten. Je nach Temperatur resultieren harte, halbharte oder weiche Rohre.

Treten Atome/Moleküle miteinander oder mit einer Grenzfläche in Wechselwirkung, so müssen verschiedene strukturelle und energetische Voraussetzungen erfüllt sein, um eine Bindung zu ermöglichen. Die an der Oberfläche eines Körpers sitzenden Atome erzeugen durch ihre nach außen nicht abgesättigten Valenzen eine spezifische Grenzflächenenergie. Durch Bindung an diese freien Valenzen können Fremdatome/-moleküle mit dieser Grenzfläche in Wechselwirkung treten.

Während ein freies Atom grundsätzlich in allen Raumrichtungen freie Valenzen anbieten kann, gilt das für ein in einer Oberfläche eingebundenes Atom nicht mehr. Hier steht nur noch eine Raumrichtung zur weiteren Anlagerung zur Verfügung. Bei einem an einer Kante oder Ecke sitzenden Atom, ist die Anzahl der für Anlagerungsreaktionen zur Verfügung stehenden Koordinationsstellen dagegen wieder größer. Aus dieser Betrachtung folgt, daß die Zahl der ungesättigten Valenzen bzw. die Oberflächenenergie und somit die Zahl der Reaktionsmöglichkeiten mit zunehmender Fehlstellenzahl bzw. steigender Mikrorauhigkeit ebenfalls zunimmt.

Im erfindungsgemäß vorliegenden Fall wird die Werkstoffoberfläche während der Umformung mechanisch beansprucht, d.h. es werden Fehlstellen in der Mikrostruktur erzeugt. Hierdurch wird die Oberfläche "aktiviert". Über das Schmiermedium werden die Additive, die umgesetzt werden sollen, unter Druck an diese aktivierte Oberfläche herangeführt und reagieren, zusätzlich unterstützt durch die freiwerdende Umformwärme, mit dem Werkstoff. Es entsteht zunächst eine chemische Reaktionsschicht. Im einfachsten Fall entsteht eine monomolekulare Schicht. Infolge weiterer Anlagerungen und Vernetzungsreaktionen kann diese Reaktionsschicht wachsen. Mit zunehmendem Abstand vom Grundwerkstoff werden die Bindungskräfte und die in Nachbarverbindungen induzierten Dipolwechselwirkungen allerdings schwächer, die Vernetzungsreaktionen weniger und die Reaktionsschicht geht allmählich in eine Adsorptionsschicht über. Dieser komplexe Schichtaufbau ist durch die chemische Bindung weitaus stärker mit dem Grundmetall verbunden als eine rein an der Metalloberfläche physikalisch adsorbierte Schicht und kann durch Temperatureinflüsse, Druckschwankungen und Strömungseffekte nicht abgeschwemmt werden.

Als Additive kommen organische Substanzen gemäß den in den Patentansprüchen 7 bis 10 genannten Gruppen von Verbindungen in Betracht.

Insbesondere kalziumhaltige Verbindungen sind von Vorteil, da hierdurch die Anlagerung von Karbonat erleichtert wird. Somit wird die Bildung der erwünschten Karbonatschutzschicht gefördert, die üblicherweise unter Einsatzbedingungen entsteht und hauptsächlich aus Kalzium- und Kupfer-Karbonat aufgebaut ist.

Der Gesamtanteil der Additive im Schmiermittel beträgt 0,2 bis 40 Gew.-%, vorzugsweise 0,5 bis 10 Gew.-%. Das/die Additiv(e) kann/können sowohl während des Umform(Zieh-)prozesses durch die entstehende Umformwärme als auch nachträglich durch entsprechende Wärmebehandlung zur Reaktion gebracht werden. Die alternative zusätzliche Wärmebehandlung findet im Temperaturbereich 100 bis 850 °C, bevorzugt bei 200 bis 600 °C, unter Schutzgas statt. Neben Einzeleffekten sind synergistische Wirkungen der Elemente Chlor, Phosphor, Silizium und Schwefel untereinander und die Art der Bindung im Additiv von Bedeutung.

Schließlich können die Additive über einen Zeitraum von wenigen Tagen bis Wochen bei Raumtemperatur nachreagieren, d.h. das entspricht mindestens der üblichen Zeit, die vom Verlassen des Halbzeugwerkes bis zum Einbau des Rohres beim Kunden vergeht.

Die Vorteile des beschriebenen Vorgehens sind, daß das Verfahren mühelos ohne aufwendige zusätzliche Arbeitsschritte in den bestehenden Fertigungsprozeß eingefügt werden kann. Diese dünne Oberflächenschicht zeichnet sich im Gegensatz zu dickeren Schichten durch ihre gute Haftfestigkeit aus, was insbesondere damit zusammenhängt, daß die Schicht über eine chemische Umsetzung mit dem Grundmaterial verbunden ist. Außerdem werden weder Biegeoperationen noch Verbindungsprozesse wie Löten, Verschrauben oder Pressen beeinträchtigt.

Die Erfindung wird anhand des folgenden Ausführungsbeispiels näher erläutert.

Es wurde ein Cu-Installationsrohr der Abmessung 15 x 1 mm hergestellt, wobei für die ersten Züge ein Standardziehöl und für die letzten drei Züge ein Sonderziehöl mit einem Schwefelanteil von 2 Gew.-% verwendet wurde. Als Schwefel-Träger wurde das Additiv Kalziumsulfonat $(Ca(SO_3-R)_2)$ in das Ziehöl eingebracht. Die Wärmebehandlung wurde in einem Durchlaufofen bei 400 °C/2 h unter Schutzgas durchgeführt.

Testmethode für Cu-Lässigkeit:

Im Labor wurde ein Stagnationstest mit 0,5 m langen Rohrabschnitten durchgeführt (regelmäßiger Wasseraustausch alle 24 h, außer an Wochenenden und Feiertagen. Bestimmung des Cu-Gehaltes in den Wasserproben, die anschließend verworfen wurden. Die Rohrabschnitte wurden jeweils wieder mit friTestwasser gefüllt).

Als Referenzmuster dienten betriebsübliche SF-Cu-Rohre (hart, blank).

| Testwasser A (Mittelwerte): | Testwasser B (Mittelwerte): |
|---|---|
| pH = 6,7<br>GH = 4,2 °dH<br>KH < 1 °dH<br>$SO_4^{2-}$ = 56 mg/l<br>$Cl^-$ = 8 mg/l | pH = 8<br>GH = 4,9 °dH<br>KH = 2,5 °dH<br>$SO_4^{2-}$ = 2 mg/l<br>$Cl^-$ = 60 mg/l |
| (GH = Gesamthärte; KH = Karbonathärte; °dH = deutsche Härte) | |

Ergebnis:

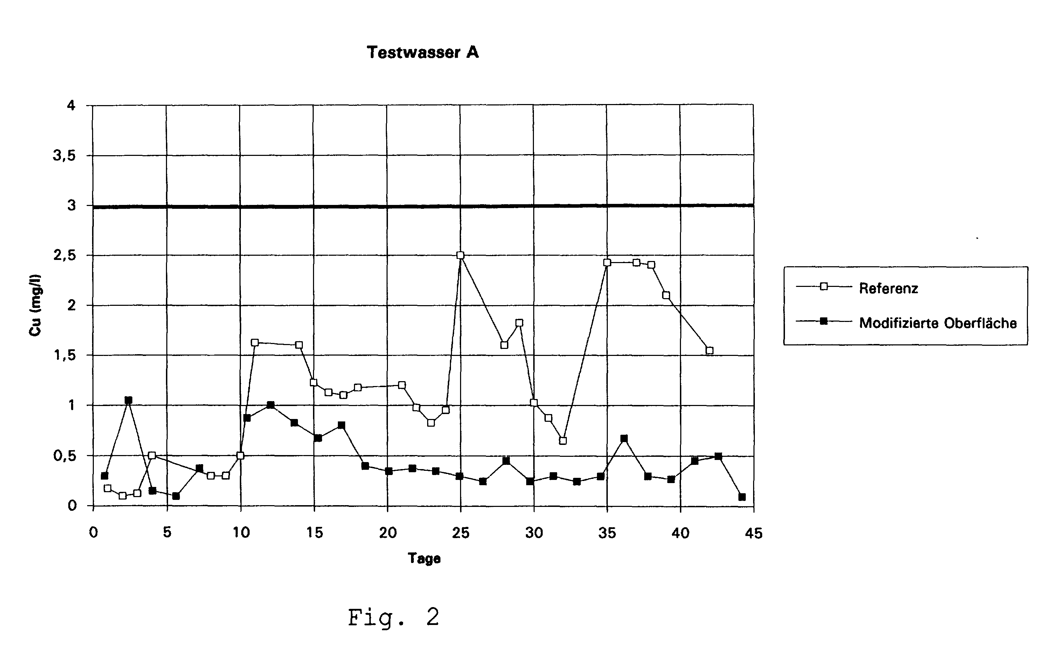

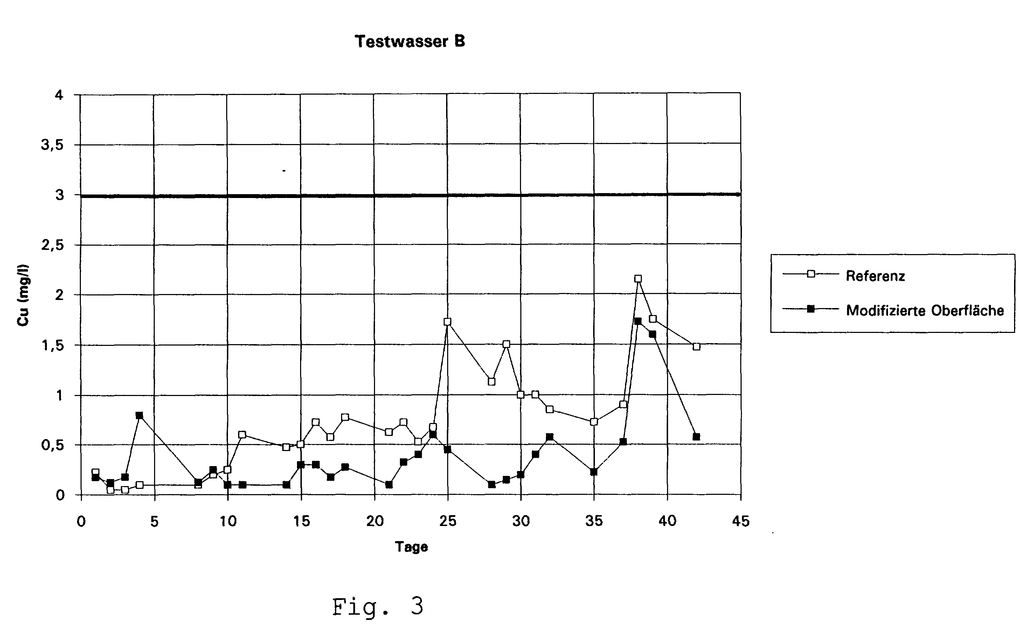

Die Cu-Lässigkeit wird in beiden Testwässern gegenüber den Referenzmustern während der Versuchslaufzeit von 42 Tagen reduziert. Im Wasser A bleiben die Gehalte ≤ 1 mg Cu/l, (vgl. Fig.2), im Wasser B vorwiegend ≤ 0,5 mg Cu/l (vgl. Fig.3).

Bei Verwendung erfindungsgemäßer Rohre wäre damit selbst bei Herabsetzung des derzeitigen Richtwertes von 3 mg Cu/l (vgl. jeweils die ausgeprägte, horizontale Linie in Fig.2/3) auf z.B. 1,5 mg Cu/l noch ein gewisser Sicherheitsabstand gegeben.

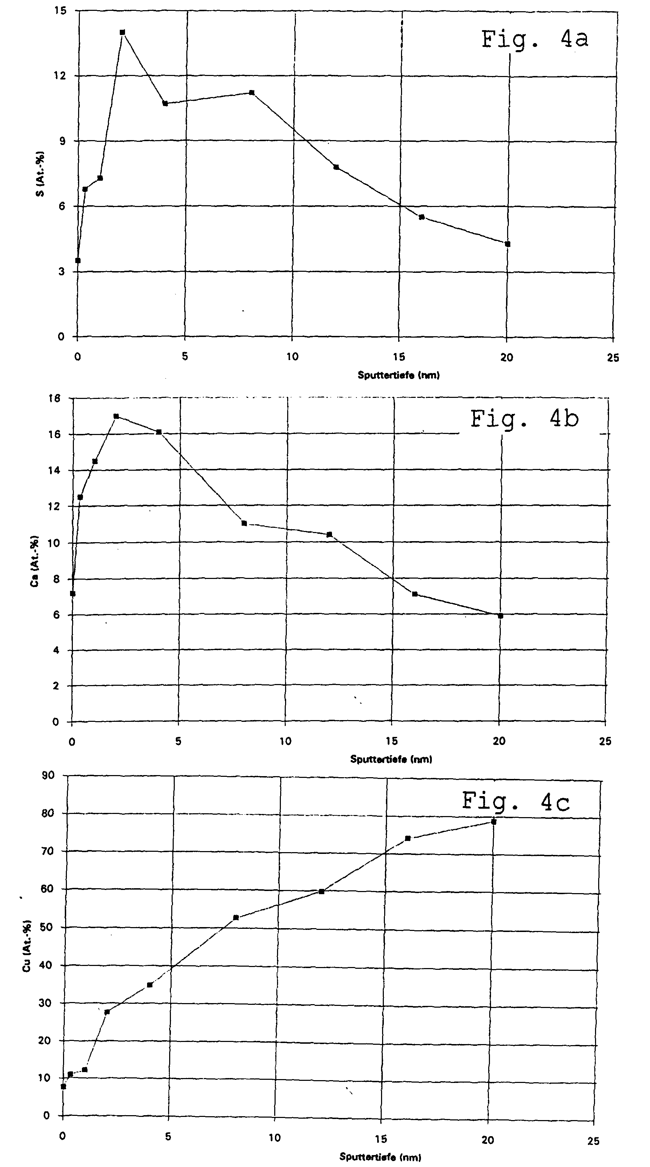

Die Fig.4 zeigt den mittels XPS gewonnenen Konzentrationsverlauf des Schwefels (a.), des Schwefel-Trägers Kalzium (b.) und des Kupfers (c.) über den Bereich der modifizierten Oberflächenschicht.

Dabei zeigt sich insbes., daß der Konzentrationsverlauf des Elements Schwefel ausgezeichnet durch den erfindungsgemäßen Kurvenverlauf (gemäß Anspruch 1) beschrieben wird.

**Patentansprüche**

1.   Korrosionsbeständiges Rohr aus Kupfer oder einer Kupfer-Legierung, dessen Rohroberfläche durch eine Schutzschicht geschützt ist,

dadurch gekennzeichnet,

daß durch den gezielten Einbau der Elemente Chlor, Phosphor, Silizium und Schwefel einzeln oder in Kombination eine einige Monolagen dicke, modifizierte Oberflächenschicht gebildet ist,

in der diese Elemente an der Werkstoffoberfläche chemisch gebunden oder adsorbiert sind,

wobei die Gesamtkonzentration der genannten Elemente in dieser Schicht von der Oberfläche in Richtung Grundwerkstoff zunächst, beginnend bei einem Anteil 0,1 bis 4 At.-% (Rest Sauerstoff, Kohlenstoff und Legierungsbestandteile), ansteigt,

im oberflächennahen Bereich innerhalb einer Ausdehnung von etwa 10 nm ein Maximum von 5 bis 50 At.-% durchschreitet und

zum Grundwerkstoff hin auf Gehalte unvermeidlicher Verunreinigungen abfällt und sich der Konzentrationsverlauf $c_i$ der Einzelelemente innerhalb der Schicht durch folgende Gleichung beschreiben läßt:

$$c_i(x) = c_{io} \ e^{-a_i x} + \frac{a_i \ c_{io}}{1 - a_i \ x_{ic_{max}}} \cdot x \cdot e^{-a_i x},$$

wobei

$c_i$:      Konzentration des Elementes i,

$c_{i0}$:      Konzentration des Elementes i an der Oberfläche der Schicht,

$c_{i \ max}$:      Konzentrationsmaximum in der Tiefe $x_{ic_{max}}$

x:      Eindringtiefe,

$x_{ic_{max}}$:      Ort maximaler Konzentration des Elementes i,

$a_i$:      Additiv- und Elementabhängige Konstante (vgl. Fig. 1).

2. Korrosionsbeständiges Rohr nach Anspruch 1, dadurch gekennzeichnet,
daß die Oberflächenschicht Chlorid-, Phosphat-, Silikat-, Siloxan-, Sulfid- und/oder Sulfatanteile enthält.

3. Korrosionsbeständiges Rohr nach Anspruch 2, dadurch gekennzeichnet,
daß das Sulfid/Sulfat-Verhältnis in der Schicht 2:1 bis 4:1 beträgt.

4. Korrosionsbeständiges Rohr nach einem oder mehreren der Ansprüche 1 bis 3, dadurch gekennzeichnet,
daß die Dicke der modifizierten Oberflächenschicht D = 15 bis 100 nm beträgt.

5. Korrosionsbeständiges Rohr nach Anspruch 4, dadurch gekennzeichnet,
daß die Elemente Chlor, Phosphor, Silizium und/oder Schwefel im oberflächenseitigen Bereich der modifizierten Oberflächenschicht innerhalb einer Ausdehnung von etwa 10 nm angereichert sind und ihre maximale Konzentration in einer Tiefe von etwa 1 bis 5 nm liegt.

6. Verfahren zur Herstellung eines korrosionsbeständigen Rohres nach einem oder mehreren der Ansprüche 1 bis 5, dadurch gekennzeichnet,
daß dem beim Umform(Zieh-)prozeß für das Rohr verwendeten Schmiermittel ein oder mehrere die Elemente Chlor, Phosphor, Silizium und Schwefel einzeln oder in Kombination abspaltende Additive zugegeben werden und daß diese Additive durch mindestens eine thermische Aktivierung in unterschiedlichen Temperaturbereichen umgesetzt werden.

7. Verfahren nach Anspruch 6, dadurch gekennzeichnet,
daß Chlor abgebende Additive aus der Gruppe der Verbindungen der Chlorparaffine, chlorgeschwefelten Olefine oder Fettsäureester mit Dischwefeldichlorid verwendet werden.

8. Verfahren nach Anspruch 6, dadurch gekennzeichnet,
daß Phosphor abgebende Additive aus der Gruppe der Verbindungen der phosphorhaltigen Zink-Organyle, Phosphorsäureester oder Phosphonsäurederivate verwendet werden.

9. Verfahren nach Anspruch 6, dadurch gekennzeichnet,
daß Silizium abgebende Additive aus der Gruppe der Verbindungen der Silikonpolymere verwendet werden.

10. Verfahren nach Anspruch 6, dadurch gekennzeichnet,
daß Schwefel abgebende Additive aus der Gruppe der Verbindungen der organischen Sulfide, Polysulfide, schwefelhaltigen Zink-Organyle, geschwefelten Olefine, geschwefelten Fette, Sulfonsäurederivate, chlorgeschwefelten Olefine oder Fettsäureester mit Dischwefeldichlorid verwendet werden.

11. Verfahren zur Herstellung eines korrosionsbeständigen Rohres nach einem oder mehreren der Ansprüche 1 bis 5, wobei die Oberflächenschicht durch den Einbau von Schwefel gebildet ist, dadurch gekennzeichnet,
daß dem beim Umform(Zieh-)prozeß für das Rohr verwendeten Schmiermittel elementarer Schwefel zugegeben wird und daß dieser durch mindestens eine thermische Aktivierung in unterschiedlichen Temperaturbereichen umgesetzt wird.

12. Verfahren nach einem oder mehreren der Ansprüche 6 bis 11, dadurch gekennzeichnet,
daß der Anteil der Additive im Schmiermittel 0,2 bis 40 Gew.-% beträgt.

13. Verfahren nach Anspruch 12, dadurch gekennzeichnet,
daß der Anteil der Additive 0,5 bis 10 Gew.-% beträgt.

14. Verfahren nach einem oder mehreren der Ansprüche 6 bis 13, dadurch gekennzeichnet,
daß die Additive durch die beim Umform(Zieh-)prozeß erzeugte Wärme umgesetzt werden.

15. Verfahren nach Anspruch 14, dadurch gekennzeichnet,
daß die Additive durch eine an den Umform(Zieh-)prozeß anschließende Wärmebehandlung bei 100 bis 850 °C umgesetzt werden.

16. Verfahren nach Anspruch 15, dadurch gekennzeichnet,
daß die Wärmebehandlung bei 200 bis 600 °C durchgeführt wird.

17. Verfahren nach einem oder mehreren der Ansprüche 14 bis 16, dadurch gekennzeichnet,
daß die Additive über einen Zeitraum von wenigen Tagen bis Wochen bei Raumtemperatur nachreagieren.

## Claims

1. Corrosion-resistant tube of copper or a copper alloy, the tube surface of which is protected by a protective layer, characterised in that, by the controlled incorporation of the elements chlorine, phosphorus, silicon and sulphur individually or in combination, a modified surface layer a few monolayers thick is formed in which those elements are chemically bound or adsorbed at the material surface, the total concentration of the mentioned elements in that layer first increasing from the surface in the direction towards the base material, beginning with a content of from 0.1 to 4 at.% (remainder oxygen, carbon and alloy constituents), passing through a maximum of from 5 to 50 at.% in the region near the surface, within a distance of approximately 10 nm, and, towards the base material, falling to contents of unavoidable impurities, and it being possible to describe the concentration pattern $c_i$ of the individual elements within the layer by the follow equation:

$$c_i(x) = c_{io} = e^{-a_i x} + \frac{a_i \, c_{io}}{1 - a_i \, x_{ic_{max}}} \cdot x \cdot e^{-a_i x},$$

wherein

$c_i$: concentration of the element i,
$c_{iO}$: concentration of the element i at the surface of the layer,
$c_{imax}$: concentration maximum at the depth $x_{ic\,max}$,
x: depth of penetration,
$x_{ic\,max}$: site of maximum concentration of the element i,
$a_i$: additive- and element-dependent constant (see Figure 1).

2. Corrosion-resistant tube according to claim 1, characterised in that the surface layer contains chloride, phosphate, silicate, siloxane, sulphide and/or sulphate portions.

3. Corrosion-resistant tube according to claim 2, characterised in that the sulphide/sulphate ratio in the layer is from 2:1 to 4:1.

4. Corrosion-resistant tube according to one or more of claims 1 to 3, characterised in that the thickness of the modified surface layer D = 15 to 100 nm.

5. Corrosion-resistant tube according to claim 4, characterised in that the elements chlorine, phosphorus, silicon and/or sulphur in that region of the modified surface layer which is near the surface are enriched within a distance of approximately 10 nm and their maximum concentration is at a depth of approximately from 1 to 5 nm.

6. Process for manufacturing a corrosion-resistant tube according to one or more of claims 1 to 5, characterised in that one or more additives that split off the elements chlorine, phosphorus, silicon and sulphur individually or in combination are added to the lubricant used in the forming (drawing) process for the tube, and in that those additives are reacted by at least one thermal activation in various temperature ranges.

7. Process according to claim 6, characterised in that chlorine-releasing additives from the compound group of the chloroparaffins, chlorosulphurised olefins or fatty acid esters with disulphur dichloride are used.

8. Process according to claim 6, characterised in that phosphorus-releasing additives from the compound group of the phosphorus-containing zinc organyls, phosphoric acid esters or phosphonic acid derivatives are used.

9. Process according to claim 6, characterised in that silicon-releasing additives from the compound group of the silicone polymers are used.

10. Process according to claim 6, characterised in that sulphur-releasing additives from the compound group of the organic sulphides, polysulphides, sulphur-containing zinc organyls, sulphurised olefins, sulphurised fats, sulphonic acid derivatives, chlorosulphurised olefins or fatty acid esters with disulphur dichloride are used.

11. Process for the manufacture of a corrosion-resistant tube according to one or more of claims 1 to 5, the surface layer being formed by the incorporation of sulphur, characterised in that elemental sulphur is added to the lubricant used in the forming (drawing) process for the tube, and in that the elemental sulphur is reacted by at least one thermal activation in various temperature ranges.

12. Process according to one or more of claims 6 to 11, characterised in that the proportion of additives in the lubricant is from 0.2 to 40% by weight.

13. Process according to claim 12, characterised in that the proportion of additives is from 0.5 to 10% by weight.

14. Process according to one or more of claims 6 to 13, characterised in that the additives are reacted by the heat generated during the forming (drawing) process.

15. Process according to claim 14, characterised in that the additives are reacted by a heat treatment at from 100 to 850°C which follows the forming (drawing) process.

16. Process according to claim 15, characterised in that the heat treatment is carried out at from 200 to 600 °C.

17. Process according to one or more of claims 14 to 16, characterised in that the additives continue to react for a period of a few days to weeks at room temperature.

**Revendications**

1. Tuyau résistant à la corrosion constitué de cuivre ou d'alliage de cuivre dont la surface du tuyau est protégée par une couche protectrice, caractérisé en ce qu'il est formé par l'incorporation ciblée des éléments chlore, phosphore, silicium et soufre individuellement ou en combinaison une couche superficielle modifiée, épaisse de certaines couches monomoléculaires,

dans laquelle ces éléments sont chimiquement liés ou adsorbés sur la surface du matériau,
la concentration totale des éléments cités dans cette couche augmentant tout d'abord à partir de la surface dans la direction du matériau de base en débutant à une part de 0,1 à 4% at. (le reste étant de l'oxygène, du carbone et des constituants de l'alliage),
passant dans un domaine proche de la surface s'étendant sur environ 10 nm un maximum de 5 à 50% at. et diminuant en allant vers le matériau de base jusqu'aux teneurs des impuretés inévitables et le tracé de la concentration $c_i$ des éléments individuels pouvant être décrit à l'intérieur de la couche par l'équation suivante :

$$c_i(x) = c_{io}\, e^{-a_i x} + \frac{a_i\, c_{io}}{1 - a_i\, x_{ic_{max}}} \cdot x \cdot e^{-a_i x},$$

dans laquelle

$c_i$ :        Concentration de l'élément i,

$c_{i0}$:        Concentration de l'élément i sur la surface de la couche,

$c_{i\,max}$ :      Maximum de la concentration à la profondeur $x_{ic\,max}$ .

$x$ :        Profondeur de pénétration,

$x_{ic_{max}}$ :      Position de la concentration maximale de l'élément i,

$a_i$ :        Constante dépendant de l'additif et de l'élément (se conf. à la fig. 1)

2. Tuyau résistant à la corrosion selon la revendication 1, caractérisé en ce que la couche superficielle contient des parts de chlorure, de phosphate, de silicate, de siloxane, de sulfure et/ou de sulfate.

3. Tuyau résistant à la corrosion selon la revendication 2, caractérisé en ce que le rapport sulfure/sulfate est compris dans la couche entre 2:1 et 4:1.

4. Tuyau résistant à la corrosion selon une ou plusieurs quelconque des revendications 1 à 3, caractérisé en ce que l'épaisseur de la couche superficielle modifiée D = 15 à 100 nm.

5. Tuyau résistant à la corrosion selon la revendication 4, caractérisé en ce que les éléments chlore, phosphore, silicium et/ou soufre sont enrichis dans un domaine sur le côté de la surface de la couche superficielle modifiée s'étendant sur environ 10 nm et leur concentration maximale se trouve dans une profondeur d'environ 1 à 5 nm.

6. Procédé pour la préparation d'un tuyau résistant à la corrosion selon une ou plusieurs quelconques des revendications 1 à 5, caractérisé en ce que l'on ajoute à l'agent lubrifiant utilisé dans le procédé de façonnage (emboutissage) du tuyau un ou plusieurs additifs se dissociant en les éléments chlore, phosphore, silicium et soufre individuellement ou en combinaison et en ce que ces additifs sont transformés par au moins une activation thermique dans différents domaines de température.

7. Procédé selon la revendication 6, caractérisé en ce que l'on utilise des additifs libérant du chlore parmi les composés des paraffines chlorées, des oléfines chloro-soufrées ou des esters d'acides gras avec du dichlorure de disoufre.

8. Procédé selon la revendication 6, caractérisé en ce que l'on utilise des additifs libérant du phosphore parmi les composés des zinc-organyles contenant du phosphore, des esters d'acide phosphorique ou des dérivés d'acide phosphonique.

9. Procédé selon la revendication 6, caractérisé en ce que l'on utilise des additifs libérant du silicium choisis parmi les composés des polymères du silicium.

10. Procédé selon la revendication 6, caractérisé en ce que l'on utilise des additifs libérant du soufre choisis parmi les composés des sulfures organiques, des polysulfures, des zinc-organyles contenant du soufre, des oléfines soufrées, des graisses soufrées, des dérivés d'acides sulfoniques, des oléfines chlorosoufrées ou des esters d'acides gras avec du dichlorure de disoufre.

11. Procédé pour la préparation d'un tuyau résistant à la corrosion selon une ou plusieurs quelconques des revendications l à 5, la couche superficielle étant formée par l'incorporation de soufre, caractérisé en ce que l'on ajoute à l'agent lubrifiant utilisé dans le procédé de façonnage (emboutissage) du tuyau du soufre élémentaire et en ce que celui-ci réagit par au moins une activation thermique dans différents domaines de température.

12. Procédé selon une ou plusieurs quelconques des revendications 6 à 11, caractérisé en ce que la part des additifs dans l'agent lubrifiant est de 0,2 à 40 % en poids.

13. Procédé selon la revendication 12, caractérisé en ce que la part des additifs est de 0,5 à 10% en poids.

14. Procédé selon une ou plusieurs quelconques des revendications 6 à 13, caractérisé en ce que les additifs sont transformés par la chaleur produite dans le procédé de façonnage (emboutissage).

15. Procédé selon la revendication 14, caractérisé en ce que les additifs sont transformés par un traitement thermique subséquent au procédé de façonnage (emboutissage) à de 100 à 850°C.

**16.** Procédé selon la revendication 15, caractérisé en ce que le traitement thermique est réalisé à de 200 à 600°C.

**17.** Procédé selon une ou plusieurs quelconques des revendications 14 à 16, caractérisé en ce que les additifs continuent à réagir sur une durée de quelques jours à quelques semaines à température ambiante.

Fig. 1

**Testwasser A**

Fig. 2

**Testwasser B**

Legend:
- □ Referenz
- ■ Modifizierte Oberfläche

Fig. 3

EP 0 731 310 B1

Fig. 4a

Fig. 4b

Fig. 4c